# EUROPEAN PATENT SPECIFICATION

(11) **EP 1 081 411 B1**
(45) Date of publication and mention of the grant of the patent: **11.07.2007**
(21) Application number: 99921230.1
(22) Date of filing: 21.05.1999
(51) Int. Cl.: F16G 1/08

(54) **TENSION MEMBER FOR BELT AND BELT MANUFACTURED USING THE SAME**
LASTAUFNAHMEELEMENT FÜR RIEMEN UND DAMIT HERGESTELLTER RIEMEN
ELEMENT DE TENSION POUR COURROIE ET COURROIE FABRIQUEE AU MOYEN DE CET ELEMENT

(30) Priority: 22.05.1998 JP 14155798
(43) Date of publication of application: 07.03.2001
(73) Proprietor: Bando Chemical Industries, Ltd., Kobe-shi, Hyogo 652-0883 (JP)
(72) Inventor: TAKEUCHI, Yuji, Bando chemical Ind.,Ltd., Kobe-shi Hyogo 652-0883 (JP)
(74) Representative: Laufhütte, Dieter
(86) International application number: PCT/JP1999/002695
(87) International publication number: WO 1999/061816

(56) References cited:
- JP-A- 4 046 240
- JP-A- 4 050 237
- JP-A- 9 126 279
- JP-A- 9 126 281
- JP-U- 55 054 636
- PATENT ABSTRACTS OF JAPAN vol. 1997, no. 09, 30 September 1997 (1997-09-30) -& JP 09 124802 A (BANDO CHEM IND LTD), 13 May 1997 (1997-05-13)
- PATENT ABSTRACTS OF JAPAN vol. 008, no. 244 (M-337), 9 November 1984 (1984-11-09) -& JP 59 123644 A (MITSUBOSHI BELT KK), 17 July 1984 (1984-07-17)
- PATENT ABSTRACTS OF JAPAN vol. 016, no. 257 (C-0949), 11 June 1992 (1992-06-11) -& JP 04 059640 A (CENTRAL GLASS CO LTD), 26 February 1992 (1992-02-26)
- PATENT ABSTRACTS OF JAPAN vol. 016, no. 238 (C-0946), 2 June 1992 (1992-06-02) -& JP 04 050144 A (ASAHI FIBER GLASS CO LTD), 19 February 1992 (1992-02-19)
- PATENT ABSTRACTS OF JAPAN vol. 015, no. 413 (C-0877), 22 October 1991 (1991-10-22) -& JP 03 170534 A (ASAHI FIBER GLASS CO LTD), 24 July 1991 (1991-07-24)

## Description

### TECHNICAL FIELD

The present invention relates to a tension member for use in various types of belts such as toothed belts, V belts, flat belts, and variable speed belts and to a belt, e.g., a toothed belt, which incorporates therein such a belt tension member.

### BACKGROUND OF THE INVENTION

For reinforcement of conventional power transmission belts such as toothed belts, a glass cord has been used as a tension member to improve strength and dimension-stability. For example, power transmission belts for use in the automobile OHC (overhead cam) drive generally adopt as a tension member an ECG150-3/13 glass fiber cord. ECG150-3/13 is prepared as follows. Three bundles of glass fibers, each of which glass fiber bundles is made up of 200 filaments having a fiber diameter of 9 µm, are brought together and given a first twist to form a strand. Then, such 13 strands are combined together and given a final twist to form a fiber glass cord called ECG150-3/13. Such a tension member accordingly involves a first and a final twist.

Such a glass fiber cord is generally RFL(resorcine formalin rubber latex)-treated so that adhesion to rubber of the belt main body is improved (for example, see Japanese Granted Patent Gazette No. H03-42290, Japanese Unexamined Patent Gazette No. H04-59640, and Japanese Unexamined Patent Gazette No. H04-50144). Such an RFL treatment is performed on glass fiber bundles forming the glass fiber cord. More accurately, the glass fiber bundles are dipped into a liquid of RFL, taken out of the RFL liquid, dried by heat, and given a first and a final twist.

With the rise in ambient temperature around the automobile engine, hydrogenated nitrile rubber has recently been used as the automobile belt rubber because it is superior in heat resistance to commonly-used chloroprene rubber. However, hydrogenated nitrile rubber is problematic because of its poor adhesive quality with respect to the tension member as compared with other rubber materials. To cope with this problem, there is proposed a technique of applying rubber cement to the final twist yarns (see Japanese Unexamined Patent Gazette No. H02-4715 and Japanese Unexamined Patent Gazette No. H03-170534).

### DISCLOSURE OF THE INVENTION

A belt incorporating a tension member made of the foregoing glass cord is able to exhibit expected performance when used in normal service conditions because the tension member is tough and dimension-stable. However, when used in rainy humid hot conditions, such a belt suffers the problem that the tension member is likely to deteriorate in early stages. As a result of such deterioration, there occurs a considerable drop in belt strength. Another problem is that the belt further suffers a drop in resistance to flex fatigue. This causes the belt to readily break.

The inventor of the present invention early began investigating the causes of these problems and found that the problems resulted from the drop in the quality of adhesion between the first twist yarns (3/0 fiber bundles) caused by the entering of water into the inside of the tension member.

To sum up, glass fiber filaments of the glass fiber bundle are adhered together by RFL. In addition, the glass fiber bundles forming first twist yarns are closely adhered together through their RFL-treated surfaces, leaving no spaces in between. However, when several such first twist yarns are paralleled and given a final twist, they are not perfectly adhered together because of the unevenness of the surface of each first twist yarn caused by the twisting. Moreover, the first twist yarns are jointed together by RFL adhesion only, which means that the degree of bonding is insufficient. Because of this, if water enters into the inside of the tension member, there is a drop in the quality of adhesion between the first twist yarns. This therefore allows each first twist yarn a fairly amount of freedom to move along the other, thereby causing the first twist yarns to damage each other.

Therefore, the inventor of the present invention proposed a tension member for use in belts (Japanese Unexamined Patent Gazette No. H09-126279). A plurality of glass fibers are paralleled, dipped into an adhesion treatment liquid whose major component is a mixture of an initial condensation product of resorcine formalin and a latex, taken out of the adhesion treatment liquid, and subjected to heat treatment. The glass fibers are adhered together by the adhesive whose major component is the aforesaid mixture impregnated between the glass fibers and are twisted in one direction to form a cord of which the belt tension member is made. The proposed belt tension member considerably improves running performance in wet-run conditions, but it still fails to provide a longer belt flex fatigue life in comparison with when traveled in non-wet run conditions.

Accordingly, an object of the present invention is to improve the water resistance of a tension member of glass fibers which is incorporated in a belt (resistance to flex fatigue that is caused by water), thereby leading to improvement in the water resistance of the belt.

The inventor of the present invention studied and clarified the mechanism of belt breakdown by conducting running tests in wet-run conditions. The running test result showed that there was a portion within the tension member where RFL had collected. Such an RFL-collecting portion underwent swelling by water, so that the degree of deformation of the inside of the tension member increased locally, resulting in breakdown of the tension member and in breakdown of the belt itself. Therefore, in the present invention, the twist count is made greater than the conventional techniques so that the RFL-collecting portion is crushed for the avoidance of serious deformation that occurs locally in the inside of the tension member.

The present invention provides a first tension member for a belt which is made of a glass cord formed by twisting a plurality of glass fibers in one direction with the plurality of glass fibers adhered together,
wherein the plurality of glass fibers are paralleled, dipped into an adhesion treatment liquid whose major component is a mixture of an initial condensation product of resorcine formalin and a latex, taken out of the adhesion treatment liquid, and subjected to heat treatment so that the plurality of glass fibers are adhered together by an adhesive whose major component is the aforesaid mixture impregnated between the glass fibers;
wherein the plurality of glass fibers are formed of high strength glass;
wherein the twist count of the plurality of glass fibers in the one direction is from 86,6 turns per meter (tpm) (2.2 turns per inch) to 118,1 tpm (3.0 turns per inch); and
wherein the diameter of the glass cord is from 0.65 mm to 0.90 mm.

The present invention makes it possible to improve the resistance to wet-run flex fatigue of the belt tension member while securing the strength of the belt tension member. High strength glass is used to secure the strength of the tension member. Further, since the twist count is above 86,6 tpm (2.2 turns per inch), this reduces RFL collection in the inside of the cord, thereby reducing the possibility of breakdown by RFL collection. It is however to be noted that if the twist count becomes too great this results in the drop in strength. For this reason, it is preferred that the upper limit of the twist count be 118,1 tpm (3.0 turns per inch). Furthermore, the cord is given a diameter not less than 0.65 mm, which provides the advantage that the foregoing strength is secured. It is however to be noted that if the cord diameter becomes too great this causes the tension member to suffer a drop in flex property. For this reason, it is preferred that the upper limit of the cord diameter be 0.90 mm.

The present invention provides a second tension member for a belt which is made of a glass cord formed by twisting a plurality of glass fibers in one direction with the plurality of glass fibers adhered together,
wherein the plurality of glass fibers are paralleled, dipped into an adhesion treatment liquid whose major component is a mixture of an initial condensation product of resorcine formalin and a latex, taken out of the adhesion treatment liquid, and subjected to heat treatment so that the plurality of glass fibers are adhered together by an adhesive whose major component is the aforesaid mixture impregnated between the glass fibers;
wherein the plurality of glass fibers are formed of high strength glass;
wherein the twist count of the plurality of glass fibers in the one direction is from 86,6 tpm (2.2 turns per inch) to 118,1 tpm (3.0 turns per inch); and
wherein an area occupied by the glass in a cross section of the glass cord is from 0.22 mm² to 0.26 mm².

The second tension member differs from the first tension member in that not the cord diameter but the glass occupation area in the cross section of the cord is specified. The glass portion of the tension member is an element directly relating to the strength and flex property of the tension member. If the glass occupation area is below 0.22 mm², then it becomes difficult to secure the strength at a required level. On the other hand, if the glass occupation area exceeds 0.26 mm², then there undesirably occurs a drop in flex property.

As can be seen from the above, by employing a tension member for a belt which is made of a glass cord formed by twisting a plurality of glass fibers in one direction with the plurality of glass fibers adhered together wherein (a) the plurality of glass fibers are paralleled, dipped into an adhesion treatment liquid whose major component is a mixture of an initial condensation product of resorcine formalin and a latex, taken out of the adhesion treatment liquid, and subjected to heat treatment so that the plurality of glass fibers are adhered together by an adhesive whose major component is the aforesaid mixture impregnated between the glass fibers, (b) the plurality of glass fibers are formed of high strength glass, (c) the twist count of the plurality of glass fibers in the one direction is from 86,6 tpm (2.2 turns per inch) to 118,1 tpm (3.0 turns per inch), (d) the diameter of the glass cord is from 0.65 mm to 0.90 mm, and (e) an area occupied by the glass in a cross section of the glass cord is from 0.22 mm² to 0.26 mm², it becomes possible to enhance the resistance to water flex fatigue of the belt tension member while securing the strength of the belt tension member.

Glass fibers are a brittle material. When glass fiber filaments strike each other or are rubbed against each other, they easily come to undergo breakdown. The reason for subjecting the glass cord to dip treatment with a solution of RFL and to heat treatment is to give adhesive properties with matrix rubber of the belt and, more importantly, to prevent filaments from directly contacting with each other as much as possible by forming a layer of RFL between the glass fiber filaments. Therefore, the amount of RFL that is adhered to the glass cord is considerably large as compared with polyester cord and aramid cord used as a tension member. It is impossible to put the glass cord in the same category as these cords for belts that are subjected to dip treatment with RFL and to heat treatment taking into account only the adhesive quality with the belt matrix rubber.

In view of the above, the present invention provides a tension member for a belt which is made of a glass cord formed by twisting a plurality of glass fibers in one direction with the plurality of glass fibers adhered together,
wherein the plurality of glass fibers are paralleled, dipped into an adhesion treatment liquid whose major component is a mixture of an initial condensation product of resorcine formalin and a latex, taken out of the adhesion treatment liquid, and subjected to heat treatment so that the plurality of glass fibers are adhered together by an adhesive whose major component is the aforesaid mixture impregnated between the glass fibers;
wherein the plurality of glass fibers are formed of high strength glass;
wherein the twist count of the plurality of glass fibers in the one direction is from 86,6 tpm (2.2 turns per inch) to 118,1 tpm (3.0 turns per inch);
wherein the diameter of the glass cord is from 0.65 mm to 0.90 mm and/or an area occupied by the glass in a cross section of the glass cord is from 0.22 mm² to 0.26 mm², and
wherein the percentage of an area occupied by the glass in a cross section of the glass cord to an area of the cross section of the glass cord is above 45% but below 70%.

In accordance with the present invention, it is possible to improve the resistance to water flex fatigue of the belt tension member while securing the strength of the belt tension member. Further, even when an impactive load is applied to the belt, it is possible to hold the degree of damage to the belt tension member as low as possible. When the percentage is below 45%, a great amount of RFL is interposed between glass fiber filaments. This results in poor paralleling of the glass fiber filaments. Accordingly, when an impactive load is applied to the belt, the belt will undergo a substantial drop in strength because uniform force is not loaded to each filament. On the other hand, when the percentage is above 70%, the amount of RFL interposed between glass fiber filaments decreases. This produces many portions whereat filaments are brought into direct contact with each other. Therefore, when an impactive load is applied to the belt, the filaments exert force to each other at the contact point, leading to breakdown. This reduces the strength of the belt. In view of this, it is preferred that the percentage be below 65%, more preferably, below 55%.

The belt incorporating the above-described belt tension member is able to improve resistance to wet-run flex fatigue while securing the strength of the belt required. Further, by properly setting the ratio of the glass occupation area to the glass cord cross-sectional area, it becomes possible to improve resistance to impact.

The high strength glass fiber used in each of the above-described tension members is not considered to be restrictive. Glass fibers generally called non-alkaline glass fibers may be used. It is therefore possible to reduce the diameter of the cord (i.e., the tension member) while holding the strength of the cord. Preferably, the high strength glass fibers have a fiber diameter of 8 µm or less for providing advantages to the fatigue property.

For the foregoing RFL (i.e., the adhesive whose major component is a mixture of an initial condensation product of resorcine formalin and a latex), as the latex there is no particular one to be used. The following may be used as the latex, which are styrene-butadiene-vinylpyridine terpolymer, chlorosulfonated polyethylene, nitrile rubber, hydrogenated nitrile rubber, epichlorohydrine rubber, SBR, chloroprene rubber, chlorinated butadiene rubber, olefine-vinylester copolymer, and natural rubber, or a combination of these latexes.

In some cases, the belt tension member is subjected to dip treatment after the yarn twisting process to coat the surface with rubber in order to enhance adhesive quality with the belt body rubber, according to the kind of rubber of the belt body. As the rubber material to form such rubber coating, there is no particular one to be used. However, when taking into account the adhesive quality with the belt body rubber, it is preferable to use a substance which contains halogen such as chlorinated rubber, polyvinyl chloride, chloroprene rubber, and chlorosulfonated polyethylene. As the solvent for the foregoing rubber cement, there is no particular one to be used. Generally, the following are preferable: aromatic hydrocarbon such as benzene, toluene, and xylene, ether, and halogenated aliphatic hydrocarbon such as trichloroethylene.

### BRIEF DESCRIPTION OF THE DRAWINGS

Figure **1** is a longitudinal sectional view of a tooted belt according to an embodiment of the present invention.
Figure **2** is a perspective view illustrating a tension member that is incorporated in the toothed belt of Figure **1** with a part thereof shown in cross section.
Figure **3** is a diagram schematically showing the construction of a belt flex fatigue test machine.
Figure **4** is a table diagram showing the structures and characteristics of toothed belts subjected to wet-run flex fatigue testing.
Figure **5** is a graph diagram representing a relationship between the cord diameter, the belt strength, and the wet-run flex life.
Figure **6** is a graph diagram representing a relationship between the glass occupation area, the belt strength, and the wet-run flex life.

### BEST MODE FOR CARRYING OUT THE INVENTION

Hereinafter, an embodiment of the present invention will be described with reference to the drawings.

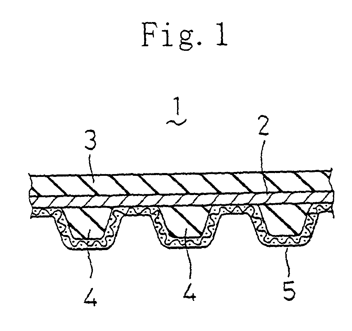

Reference is made to Figure **1** which depicts a belt **1**. The belt **1** is a toothed belt as a power transmission belt and comprises a tension member **2** provided in the direction of the circumference of the belt **1**, a back rubber **3** provided on one side of the tension member **2** (the back side), and tooth rubbers **4** provided on the other side of the tension member **2** (the side opposite to where the back rubber **3** is provided) at given pitches to be spaced from each other in the belt circumferential direction, wherein the side of the belt **1** carrying the tooth rubbers **4** is covered with a tooth fabric material **5**.

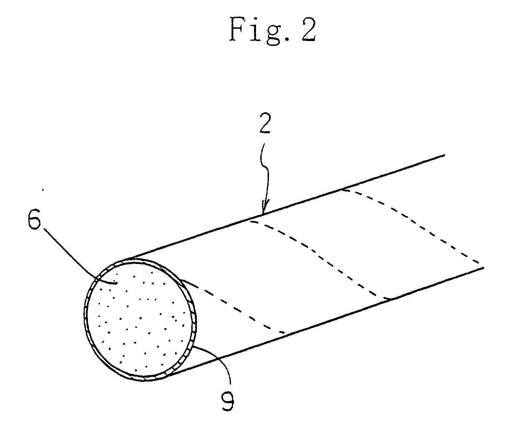

Reference is made to Figure **2** which is an illustration of the tension member **2**. The tension member **2** is made of a glass cord. The glass cord is prepared as follows. A plurality of bundles of fibers (each fiber bundle is a collection of 200 filaments **6** which are non-alkaline glass fibers (S-glass fibers having a diameter of 7 µm) are paralleled, dipped into a Vp-SBR type RFL liquid (concentration: 20% by weight), taken out of the RFL liquid, subjected to heat treatment for one minute at 240 degrees centigrade, and given a twist. Further, applied to the surface of the glass cord is a rubber coating **9**.

The Vp-SBR type RLF uses a Vp-SBR (vinylpyridine-styrene-butadiene terpolymer) latex. The rubber coating **9** is formed as follows. The glass cord, which has received a twist, is dipped into a solution of rubber cement (20% by weight) whose major component is chlorosulfonated polyethylene, taken out of the solution, and subjected to heat/dry treatment for one minute in an atmosphere of 150 degrees centigrade.

Both the back rubber **3** and the tooth rubber **4** are made of a rubber composition whose major material is hydrogenated nitrile rubber. The tooth fabric material **5** uses 6,6-nylon yarns as yarns extending in the direction of the belt width and woolie-finished yarns of 6,6-nylon for industrial use as yarns extending in the direction of the belt length.

The toothed belt **1** is molded by a conventional press fitting technique with the foregoing materials, wherein the tooth pitch is 8 mm (tooth form: STS), the number of teeth is 113, and the belt width is 19 mm.

### CONSTRUCTION OF THE TENSION MEMBER

Examples 1-16 were prepared and toothed belts were manufactured using these examples as the tension member **2**.

### EXAMPLE 1

The tension member **2** of Example 1 was prepared (the number of fiber bundles: 33; the twist count: 102,4 tpm (2.6 turns per inch) (tpi); the cord diameter (the glass cord diameter): 0.78 mm; and the glass occupation area (the area occupied by a glass portion of the cord in a cross section thereof): 0.254 mm²). The glass occupation ratio (the percentage of the glass occupation area to the cross-sectional area of the cord) is 53.1%.

### Example 2

The tension member **2** of Example 2 was prepared (the number of fiber bundles: 33; the twist count: 118,1 tpm (3.0 tpi); the cord diameter: 0.82 mm; and the glass occupation area: 0.254 mm²). The glass occupation ratio is 48.1%.

### Example 3

The tension member **2** of Example 3 was prepared (the number of fiber bundles: 33; the twist count: 141,7 tpm (3.6 tpi); the cord diameter: 0.85 mm; and the glass occupation area: 0.254 mm²). The glass occupation ratio is 44.8%.

### Example 4

The tension member **2** of Example 4 was prepared (the number of fiber bundles: 30; the twist count: 102,4 tpm (2.6 tpi); the cord diameter: 0.65 mm; and the glass occupation area: 0.231 mm²). The glass occupation ratio is 69.6%.

### Example 5

The tension member **2** of Example 5 was prepared (the number of fiber bundles: 30; the twist count: : 118,1 tpm (3.0 tpi); the cord diameter: 0.68 mm; and the glass occupation area: 0.231 mm²). The glass occupation ratio is 63.6%.

### Example 6

The tension member **2** of Example 6 was prepared (the number of fiber bundles: 30; the twist count: 141,7 tpm (3.6 tpi); the cord diameter: 0.72 mm; and the glass occupation area: 0.231 mm²). The glass occupation ratio is 56.8%.

### Example 7

The tension member **2** of Example 7 was prepared (the number of fiber bundles: 39; the twist count: 102,4 tpm (2.6 tpi); the cord diameter: 0.91 mm; and the glass occupation area: 0.300 mm²). The glass occupation ratio is 46.2%.

### Example 8

The tension member **2** of Example 8 was prepared (the number of fiber bundles: 39; the twist count: 118,1 tpm (3.0 tpi); the cord diameter: 0.93 mm; and the glass occupation area: 0.300 mm²). The glass occupation ratio is 44.2%.

### Example 9

The tension member **2** of Example 9 was prepared (the number of fiber bundles: 26; the twist count: 102,4 tpm (2.6 tpi); the cord diameter: 0.62 mm; and the glass occupation area: 0.200 mm²). The glass occupation ratio is 66.2%.

### Example 10

The tension member **2** of Example 10 was prepared (the number of fiber bundles: 26; the twist count: 118,1 tpm (3.0 tpi); the cord diameter: 0.64 mm; and the glass occupation area: 0.200 mm²). The glass occupation ratio is 62.1%.

### Example 11

The tension member **2** of Example 11 was prepared (the number of fiber bundles: 33; the twist count: 63,0 tpm (1.6 tpi); the cord diameter: 0.80 mm; and the glass occupation area: 0.254 mm²). The glass occupation ratio is 66.0%.

### Example 12

The tension member **2** of Example 12 was prepared (the number of fiber bundles: 33; the twist count: 78,7 tpm (2.0 tpi); the cord diameter: 0.72 mm; and the glass occupation area: 0.254 mm²). The glass occupation ratio is 62.4%.

### Example 13

The tension member **2** of Example 13 was prepared (the number of fiber bundles: 30; the twist count: 63,0 tpm (1.6 tpi); the cord diameter: 0.60 mm; and the glass occupation area: 0.231 mm²). The glass occupation ratio is 81.6%.

### Example 14

The tension member **2** of Example 14 was prepared (the number of fiber bundles: 30; the twist count: 78,7 tpm (2.0 tpi); the cord diameter: 0.62 mm; and the glass occupation area: 0.231 mm²). The glass occupation ratio is 76.5%.

### Example 15

The tension member **2** of Example 15 was prepared (the number of fiber bundles: 39; the twist count: 78,7 tpm (2.0 tpi); the cord diameter: 0.92 mm; and the glass occupation area: 0.300 mm²). The glass occupation ratio is 45.2%.

### Example 16

The tension member **2** of Example 16 was prepared (the number of fiber bundles: 26; the twist count: 78,7 tpm (2.0 tpi); the cord diameter: 0.58 mm; and the glass occupation area: 0.200 mm²). The glass occupation ratio is 75.8%.

### WET-RUN FLEX FATIGUE TESTING

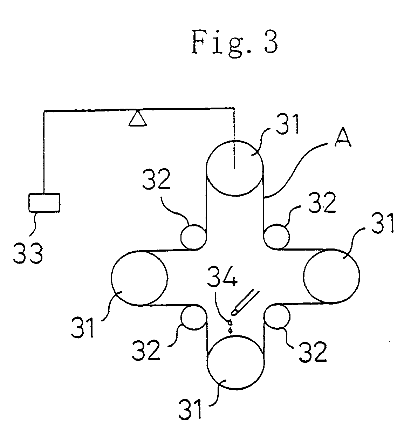

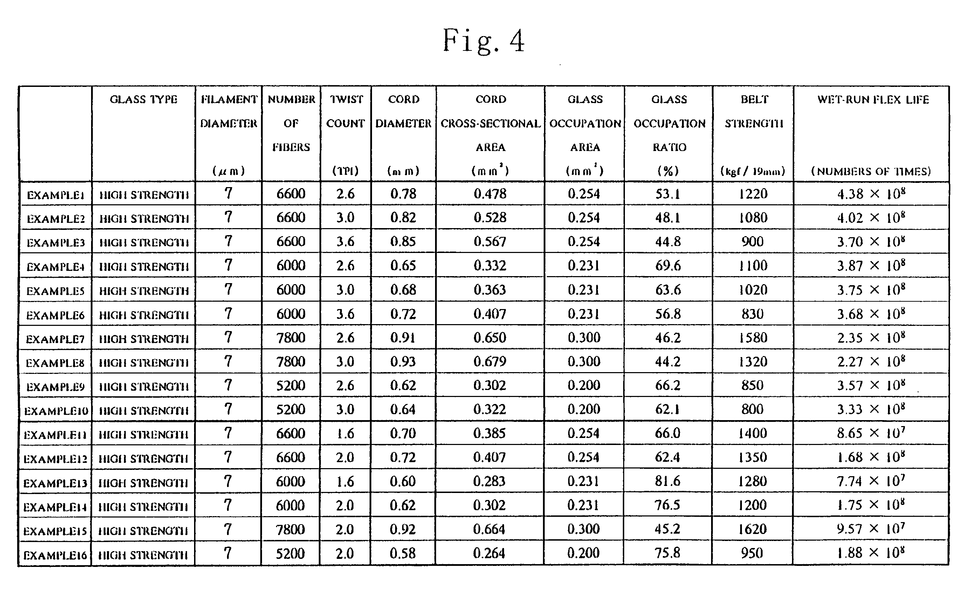

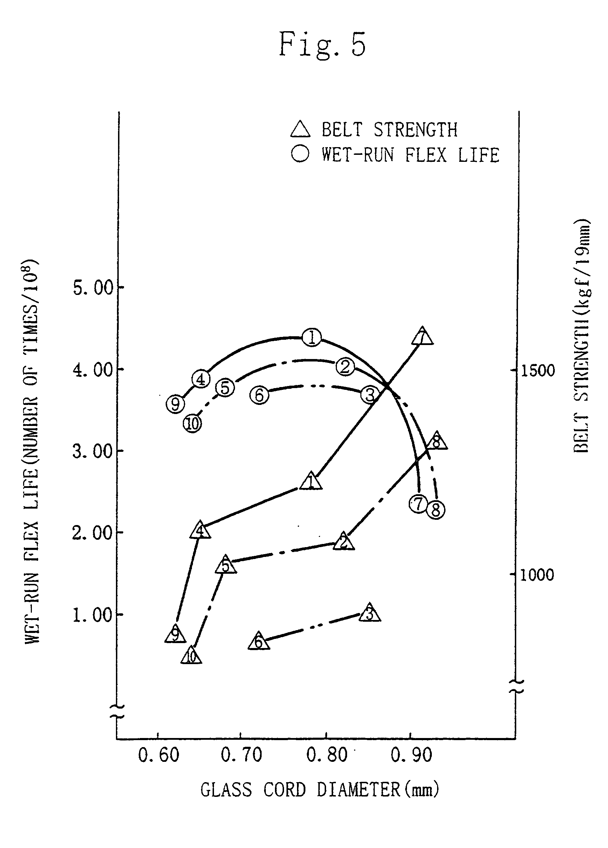

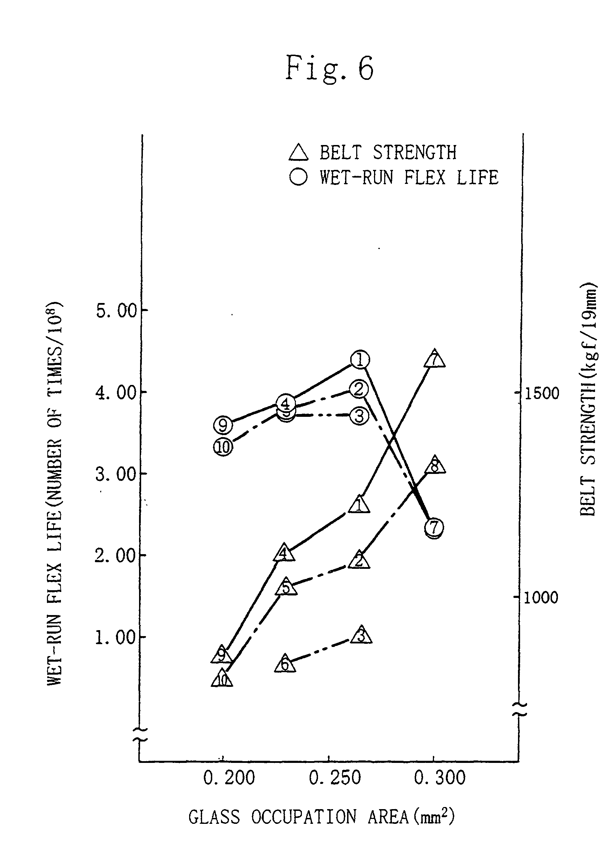

The toothed belts A incorporating the tension members **2** of Examples 1-16 respectively were subjected to wet-run flex fatigue testing. Each of the toothed belts A was mounted on a belt flex test machine comprising four large-pulleys **31** and four small-pulleys **32** (diameter: 30 mm) each of which is disposed between the two adjoining large-pulleys **31**. More specifically, as shown in Figure **3**, each toothed belt A was wound around the four large-pulleys **31** and the four small-pulleys **32**. Then, with a tension of 392 N (40 kgf) applied to the toothed belt A by the use of a weight **33**, water, referenced by **34**, was dropped onto the bottom land of the toothed belt A at a rate of one liter per hour. Under such conditions, the tooted belt A was run at 5500 rpm until it had undergone breakdown. The number of times the toothed belt A is bent until the breakdown was counted. The test results are shown in Figure **4** together with the strengths of the belts. Figure **5** shows a relationship between the cord diameter, the wet-run flex life, and the belt strength. Figure **6** shows a relationship between the glass occupation area, the wet-run flex life, and the belt strength.

As Figure **4** shows, the toothed belts of Examples 1, 2, 4, 5, 7, and 8 are greater in belt strength and longer in wet-run flex life than the remaining other examples. Examples 1, 2, 3, 11, and 12 are a group of having the same total number of glass fibers but having different twist counts, therefore being different in cord diameter. It is known from making comparison among these examples that as the twist count increases the belt strength decreases and that the wet-run flex life reaches the peak when the twist count is 102,4 tpm (2.6 tpi) and decreases not only when the twist count is above 102,4 tpm (2.6 tpi) but also when the twist count is blow 102,4 tpm (2.6 tpi). This is the same as for a group of Examples 4, 5, 6, 13, and 14, a group of Examples 7, 8, and 15, and a group of Examples 9, 10, and 16.

The result shows that for extension of the wet-run flex life and for securing of belt strength of 9807 N/19mm (1000 kgf/19mm) the twist count is above 78,7 tpm (2.0 tpi) but below 141,7 tpm (3.6 tpi), more preferably, from about 86,6 tpm (2.2 tpi) up to about 118,1 tpm (3.0 tpi).

Further, as can be seen from Figure **5** which shows a relationship between the cord diameter, the belt strength, and the wet-run flex life, when the cord diameter falls in the range between 0.65 mm and 0.90 mm, this allows the securing of a high belt strength to be compatible with the extending of the wet-run flex life. Further, as can be seen from Figure **6** which shows a relationship between the glass occupation area, the belt strength, and the wet-run flex life, when the glass occupation area falls in the range between 0.22 mm² and 0.26 mm², this allows the securing of a high belt strength to be compatible with the extending of the wet-run flex life.

Further, for the case of Examples 1, 2, 4, and 5, since the glass occupation ratio is above 45% but below 70%, this makes it possible to secure a greater belt strength while improving resistance to wet-run flex fatigue. Further, even when an impactive load is applied to the belt, it is possible to hold the degree of damage to the glass cord as low as possible.

## Claims

1. A tension member (2) for a belt (1) which is made of a glass cord formed by twisting a plurality of glass fibers in one direction with said plurality of glass fibers adhered together,
wherein said plurality of glass fibers are paralleled, dipped into an adhesion treatment liquid whose major component is a mixture of an initial condensation product of resorcine formalin and a latex, taken out of said adhesion treatment liquid, and subjected to heat treatment so that said plurality of glass fibers are adhered together by an adhesive whose major component is said mixture impregnated between said glass fibers; **characterised in that**
said plurality of glass fibers are formed of high strength glass;
wherein the twist count of said plurality of glass fibers in said one direction is from 86,6 turns per meter (2.2 turns per inch) to 118,1 turns per meter (3.0 turns per inch); and
wherein the diameter of said glass cord is from 0.65 mm to 0.90 mm.

2. A tension member (2) for a belt (1) which is made of a glass cord formed by twisting a plurality of glass fibers in one direction with said plurality of glass fibers adhered together,
wherein said plurality of glass fibers are paralleled, dipped into an adhesion treatment liquid whose major component is a mixture of an initial condensation product of resorcine formalin and a latex, taken out of said adhesion treatment liquid, and subjected to heat treatment so that said plurality of glass fibers are adhered together by an adhesive whose major component is said mixture impregnated between said glass fibers; **characterised in that**
said plurality of glass fibers are formed of high strength glass;
wherein the twist count of said plurality of glass fibers in said one direction is from 86,6 turns per meter (2.2 turns per inch) to 118,1 turns per meter (3.0 turns per inch); and
wherein an area occupied by said glass in a cross section of said glass cord is from 0.22 mm² to 0.26 mm².

3. The belt tension member (2) of claim 1,
wherein an area occupied by said glass in a cross section of said glass cord is from 0.22 mm² to 0.26 mm².

4. The belt tension member (2) of any one of claims 1-3,
wherein the percentage of an area occupied by said glass in a cross section of said glass cord to an area of said cross section of said glass cord is above 45% but below 70%.

5. A belt (1) which incorporates therein a belt tension member (2) manufactured in accordance with any one of claims 1-4.

## Patentansprüche

1. Zugelement (2) für einen Riemen (1), das aus einem Glascord hergestellt wird, der durch Verzwirnen einer Vielzahl von Glasfasern in einer Richtung gebildet wird, wobei die Vielzahl von Glasfasern miteinander verklebt wird,
wobei die Vielzahl von Glasfasern parallel angeordnet wird, in eine Haftbehandlungsflüssigkeit eingetaucht wird, deren Hauptbestandteil eine Mischung aus einem Vorkondensationsprodukt von Resorcin-Formalin und einem Latex ist, aus der Haftbehandlungsflüssigkeit herausgenommen wird und einer Wärmebehandlung unterzogen wird, so dass die Vielzahl von Glasfasern miteinander durch einen Klebstoff verklebt wird, dessen Hauptbestandteil die oben genannte Mischung ist, die zwischen die Glasfasern eingetränkt wird; **dadurch gekennzeichnet, dass**
die Vielzahl von Glasfasern aus hochfestem Glas gebildet wird;
wobei die Verzwirnungszahl der Vielzahl von Glasfasern in der einen Richtung 86,6 Windungen pro Meter (2,2 Windungen pro Zoll) bis 118,1 Windungen pro Meter (3,0 Windungen pro Zoll) beträgt; und
wobei der Durchmesser des Glascords 0,65 mm bis 0,90 mm beträgt.

2. Zugelement (2) für einen Riemen (1), das aus einem Glascord hergestellt wird, der durch Verzwirnen einer Vielzahl von Glasfasern in einer Richtung gebildet wird, wobei die Vielzahl von Glasfasern miteinander verklebt wird,
wobei die Vielzahl von Glasfasern parallel angeordnet wird, in eine Haftbehandlungsflüssigkeit eingetaucht wird, deren Hauptbestandteil eine Mischung aus einem Vorkondensationsprodukt von Resorcin-Formalin und einem Latex ist, aus der Haftbehandlungsflüssigkeit herausgenommen wird und einer Wärmebehandlung unterzogen wird, so dass die Vielzahl von Glasfasern durch einen Klebstoff miteinander verklebt wird, dessen Hauptbestandteil die oben genannte Mischung ist, die zwischen die Glasfasern eingetränkt wird; **dadurch gekennzeichnet, dass**
die Vielzahl von Glasfasern aus hochfestem Glas gebildet wird;
wobei die Verzwirnungszahl der Vielzahl von Glasfasern in der einen Richtung 86,6 Windungen pro Meter (2,2 Windungen pro Zoll) bis 118,1 Windungen pro Meter (3,0 Windungen pro Zoll) beträgt; und
wobei eine Fläche, die von dem Glas in einem Querschnitt des Glascords eingenommen wird, 0,22 mm² bis 0,26 mm² beträgt.

3. Riemenzugelement (2) nach Anspruch 1,
wobei eine Fläche, die von dem Glas in einem Querschnitt des Glascords eingenommen wird, 0,22 mm² bis 0,26 mm² beträgt.

4. Riemenzugelement (2) nach einem der Ansprüche 1 bis 3,
wobei der Prozentsatz einer Fläche, die von dem Glas in einem Querschnitt des Glascords eingenommen wird, im Verhältnis zu einer Fläche des Querschnitts des Glascords über 45%, aber unter 70% beträgt.

5. Riemen (1), der in sich ein Riemenzugelement (2) integriert, das in Übereinstimmung mit einem der Ansprüche 1 bis 4 hergestellt worden ist.

## Revendications

1. Elément de traction (2) pour une courroie (1) fabriqué à partir d'une corde en verre formée en tordant une pluralité de fibres de verre dans un sens, ladite pluralité de fibres de verre adhérant ensemble,
ladite pluralité de fibres de verre étant disposée de manière parallèle, trempée dans un liquide de traitement par adhésion dont le composant principal est un mélange d'un produit de condensation initiale de résorcine-formaline et d'un latex, sortie dudit liquide de traitement par adhésion et soumise à un traitement thermique afin que ladite pluralité de fibres de verre soit adhérée ensemble par l'intermédiaire d'un adhésif dont le composant principal est ledit mélange venant s'imprégner entre lesdites fibres de verre; **caractérisé en ce que**
ladite pluralité de fibres de verre est formée par du verre à haute résistance;
le nombre de tours de ladite pluralité de fibres de verre dans ledit un sens étant de l'ordre de 86,6 tours par mètre (2,2 tours par pouce) à 118,1 tours par mètre (3,0 tours par pouce); et
le diamètre de ladite corde en verre étant de l'ordre de 0,65 mm à 0,90 mm.

2. Elément de traction (2) pour une courroie (1), fabriqué à partir d'une corde en verre formée en tordant une pluralité de fibres de verre dans un sens, ladite pluralité de fibres de verre adhérant ensemble,
ladite pluralité de fibres de verre étant disposée de manière parallèle, trempée dans un liquide de traitement par adhésion dont le composant principal est un mélange d'un produit de condensation initiale de résorcine-formaline et d'un latex, sortie dudit liquide de traitement par adhésion et soumise à un traitement thermique afin que ladite pluralité de fibres de verre soit adhérée ensemble par l'intermédiaire d'un adhésif dont le composant principal est ledit mélange venant s'imprégner entre lesdites fibres de verre; **caractérisé en ce que**
ladite pluralité de fibres de verre est formée par du verre à haute résistance;
le nombre de tours de ladite pluralité de fibres de verre dans ledit un sens étant de l'ordre de 86,6 tours par mètre (2,2 tours par pouce) à 118,1 tours par mètre (3,0 tours par pouce); et
une superficie occupée par ledit verre dans une coupe transversale de ladite corde en verre étant de 0,22 mm² à 0,26 mm².

3. Elément de traction de courroie (2) selon la revendication 1,
une superficie occupée par ledit verre dans une coupe transversale de ladite corde en verre étant de 0,22 mm² à 0,26 mm².

4. Elément de traction de courroie (2) selon l'une quelconque des revendications 1 à 3,
le pourcentage d'une superficie occupée par ledit verre dans une coupe transversale de ladite corde en verre étant, par rapport à une superficie de ladite section transversale de ladite corde en verre, supérieur à 45%, mais inférieur à 70%.

5. Courroie (1) qui comporte un élément de traction de courroie (2) fabriqué selon l'une quelconque des revendications 1 à 4.
